# EUROPEAN PATENT APPLICATION

(11) **EP 2 333 381 A1**
(43) Date of publication of application: **15.06.2011**
(21) Application number: 08810108.4
(22) Date of filing: 05.09.2008
(51) Int. Cl.: F16H 55/08

(54) **GEAR DEVICE**

(71) Applicant: Ikemura, Masahiro, Kanagawa 212-0027 (JP)
(72) Inventor: Ikemura, Masahiro, Kanagawa 212-0027 (JP)
(74) Representative: Richards, John
(86) International application number: PCT/JP2008/066053
(87) International publication number: WO 2010/026643

(57) **Abstract**

As for the gears, this invention makes the transmission angle error and the backlash very small, and reduces vibration and mechanical sound. If form of the teeth in gears are made into the circle, at the angle which the peak of a tooth top and the peak of a tooth bottom overlap, the backlash of the gears will be made to zero. As for the other mesh angle, the correct degree of transmission angle is included in the range of the backlash. If it sets it as 1 cycle to become mesh of the same condition, as for one half of cycles, it will be in the condition which the tooth top and the tooth bottom replaced, and will become the same mesh. If the slice of the gears of the circle-tooth is made as the helical gear by the detailed lamination, the mesh from which the phase shifted exists in that pitch point, and the action of the gears are limited at a zero-backlash-part. Hence, if it is the helical gear of the phase-width of more-1/2-cycles of the circle-tooth, it will be an exact-transmission-angle in all the rotation-angles, and it will become mesh of the zero-backlash. Moreover, it sets up the margin to the collision direction and has the tooth-form-shaping, as the zero-backlash of the aforesaid gears is maintained.

## Description

### Background of the Invention

### Field of the Invention

This invention relates to the field of circulator-tooth-profiled helical gear assembly and, in particular, to one that provides for the minimization of rotational transmission error and backlash.

### Description of Related Art

A preliminary search directed to the novel features related to this non-transmission-error and non-backlash gear assembly with a precise-rotation angle of the present invention uncovered the following related prior art.
Patent Document 1: Japanese Patent Application No. S49-60255
Patent Document 2: Japanese Patent Application No. S49-84162
Patent Document 3: Japanese Patent Application No. S51-96023
Patent Document 4: Japanese Patent Application No. H09-260568
Patent Document 5: Japanese Patent Application No. 2006-172806
Patent Document 6: Japanese Patent Application No. 2007-286868

This invention is the gear which achieved both of mesh of a precise-rotation-transmission-angle and non-backlash. This is forming the helical-gears from teeth-form of a circle-standard; the performance accomplished what had been thought impossible.

### Brief Summary of the Invention

According to an aspect of this invention, the gear assembly which is the non-Transmission-Error and non-Backlash Gears comprises first and second gears. The spur-gears are shifted at the prescribed-angle, and it laminates repeatedly to the axial-direction, and the envelope-curve of the spur-gears- external-configuration formed around the outer circumference of the axis is formed as the external-configuration. These are the helical-gears, besides it is the gear-system which meshes the helical-gear with the same number of teeth mutually.
The center of the teeth formed standard circles is located on the circumference of gears-base-circle, moreover, plural teeth formed standard circles contact mutually and are placed, moreover, the teeth formed standard circles makes the parts of the teeth-form by turns along the direction of the circumference, in contrast to the circumference-parts located in the inside-and-outside of the teeth formed standard circles. As for the mesh-position with which 'the uppermost of the tooth-top of one spur-gear' and 'the bottommost-point of the tooth-bottom of another spur-gear' overlap with 'the centerline to which each rotation-axis are connected', both slice-gears are overlapped in the direction of the centerline. Furthermore, the slice-gear-overlap-regions is deleted, it is the gear-system which made the above as the teeth-form.

According to another aspect of this invention, as for the slice-gears, the angle which becomes the same-mesh-condition at the minimum-angle is made into one Cycle. As for the slice-gears of the axial-direction of the helical-gear, the angle laminated-and-rotated with the axis is the gear-system of the phase of 1/2 or more Cycle.

According to another aspect of this invention, the spur-gears are shifted at the prescribed-angle, and it laminates repeatedly to the axial-direction, and the envelope-curve of the spur-gears-external-configuration formed around the outer circumference of the axis is made as the external-configuration. These are helical-gears, moreover, it is the gear-system which meshes the helical-gears of the different-teeth-number mutually. The center of the teeth formed standard circles is located on the circumference of gears-base-circle, moreover, plural teeth formed standard circles contact mutually and are placed, moreover, the teeth formed standard circles makes the parts of the teeth-form by turns along the direction of the circumference, in contrast to the circumference-parts located in the inside-and-outside of the teeth formed standard circles. As for the mesh-position with which 'the uppermost of the tooth-top of one spur-gear' and 'the bottommost-point of the tooth-bottom of another spur-gear' overlap with 'the centerline to which each rotation-axis are connected', each slice-gears are rotated by a correct-transmission-angle.
This gear-system is the teeth-form which deleted the overlap-region of aforesaid the slice-gears.

According to another aspect of this invention, as for mesh of a correct-transmission-angle of the teeth formed standard circles in the different-teeth-number, the calculation-value from 'the center of the teeth formed standard circle of one spur-gear' to 'the center of the teeth formed standard circle of another spur-gear' is obtained. The value of the overlap-distance is obtained by the prescribed-calculation in comparison with the diameter of the gears-base- circles. This is the gear-system which deletes those regions of overlap.

According to another aspect of this invention, This case is mesh of a correct-transmission-angle with the gears of the different-teeth-number. As for the distance of 'the mesh-reference-point of one gear' to 'the center of the teeth formed standard circles of another gear', it compares with the radius of the teeth formed standard circles, this distance smaller than the radius becomes the value of the overlap-region. This is the gear-system which deleted these regions of overlap.

According to another aspect of this invention, as for the mesh peak, the distance of the tolerance-margin is shifted in the direction of the centerline, the gear-system which deleted those regions of overlap.

According to another aspect of this invention, as for the slice-gears, the mesh-overlap-parts which overlap with the mesh-reference-point are deleted in all phases, the gear-system which makes this the external-configuration.

This invention is a gears which achieves both of mesh of a precise-rotation-transmission-angle and non-backlash. This is faculty needed for high-precision-mechanism. And the energy-loss, the high velocity-revolution, the mechanical-vibration, the sound-noise, etc. have a good performance.

### Brief Description of the Drawings

FIG. 1 is a cross-section view which the deflection-amount of the circle-tooth of the gear-system was incorporated.
FIG. 2 is a cross-section view of the circle-tooth of the gear-system.
FIG. 3 is a schematic-diagram showing rotation-movement of the circle-tooth (teeth formed standard circles) of the gear system which is a ratio of the diameter of 1:1.
Fig. 4 is a schematic-diagram showing rotation-movement of the gears, the ratio of the diameter is 1:1 and the teeth formed standard is the gear system of the ellipse.
FIG. 5 is a schematic-diagram showing mesh of -25.71° of the circle-teeth. (The ratio of the diameters of seven teeth is 1:1)
FIG. 6 is a schematic-diagram showing mesh of -12° of the circle-teeth. (The ratio of the diameters of seven teeth is 1:1)
FIG.7 is a schematic diagram showing mesh of 0° of the circle-teeth. (The ratio of the diameters of seven teeth is 1:1)
FIG. 8 is a schematic diagram showing mesh of 7° of the circle-teeth. (The ratio of the diameters of seven teeth is 1:1)

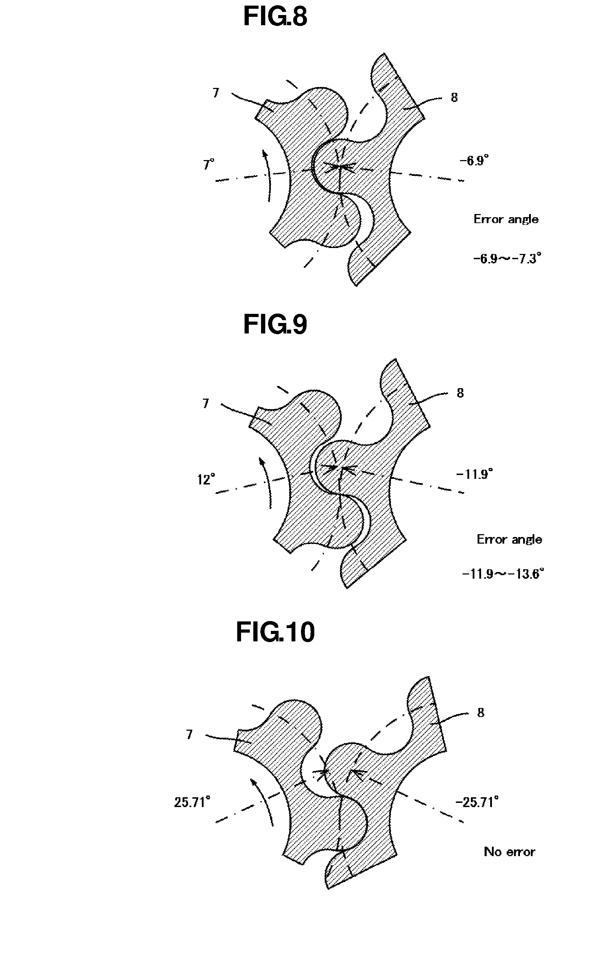

FIG. 8 is a schematic-diagram showing mesh of 12° of the circle-teeth. (The ratio of the diameters of seven teeth is 1:1)
FIG.9 is a schematic-diagram showing mesh of 25.71° of the circle-teeth. (The ratio of the diameters of seven teeth is 1:1)

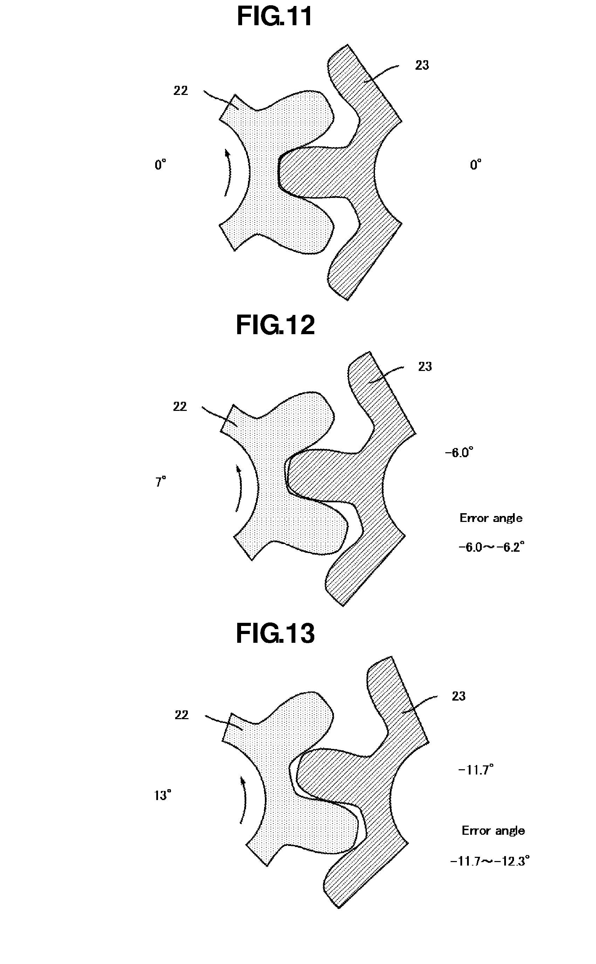

FIG. 11 is a schematic-diagram showing mesh of 0° of the conventional-teeth. (The ratio of the diameters of seven teeth is 1:1)
FIG. 12 is a schematic-diagram showing mesh of 7° of the conventional-teeth. (The ratio of the diameters of seven teeth is 1:1)
FIG. 13 is a schematic diagram showing mesh of 13° of the conventional-teeth. (The ratio of the diameters of seven teeth is 1:1)

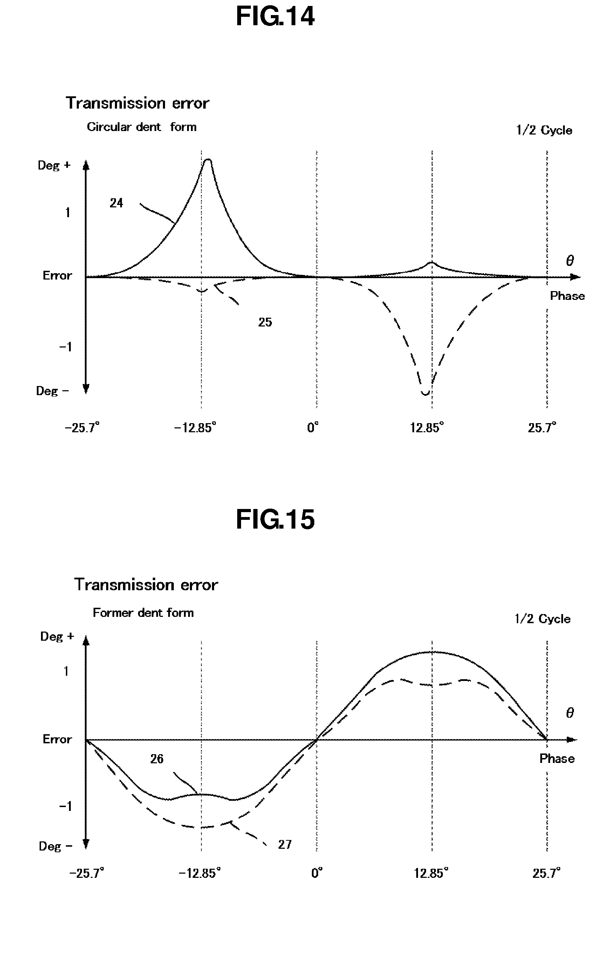

FIG. 14 is a graph showing the backlash of the mesh-phase of the circle-teeth.
FIG. 15 is a graph showing the backlash of the mesh-phase of the conventional teeth.

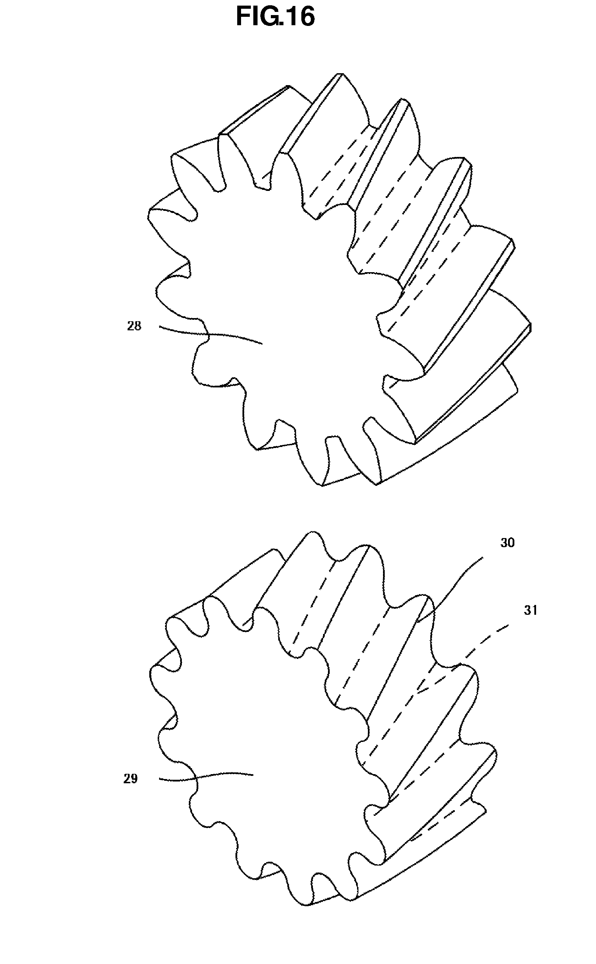

FIG. 16 is a perspective view of the helical gear of the conventional teeth and the circle-teeth.

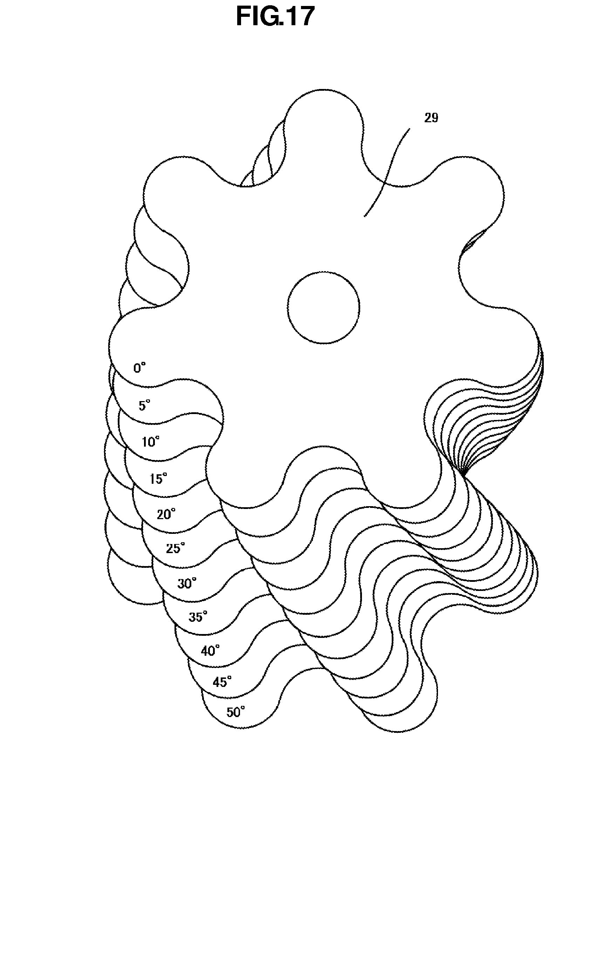

FIG. 17 is a schematic diagram which laminates the slice-gears of the circle-teeth, and constitutes the helical-gear.

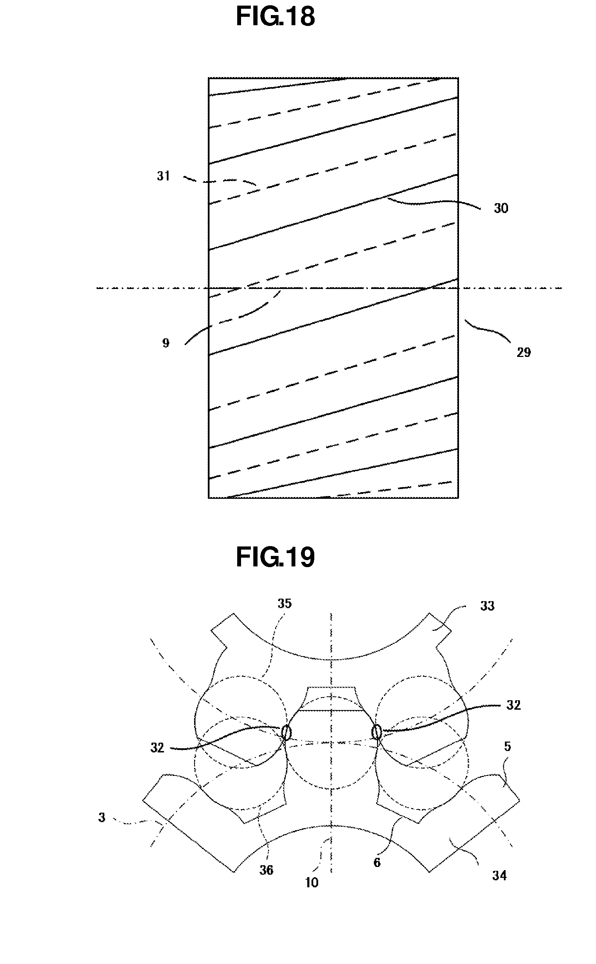

FIG. 18 is a schematic diagram which looked at the helical-gear of the circle-tooth from width.
FIG. 19 is a schematic diagram showing the gear-system which cut the teeth-top and the teeth-bottom.

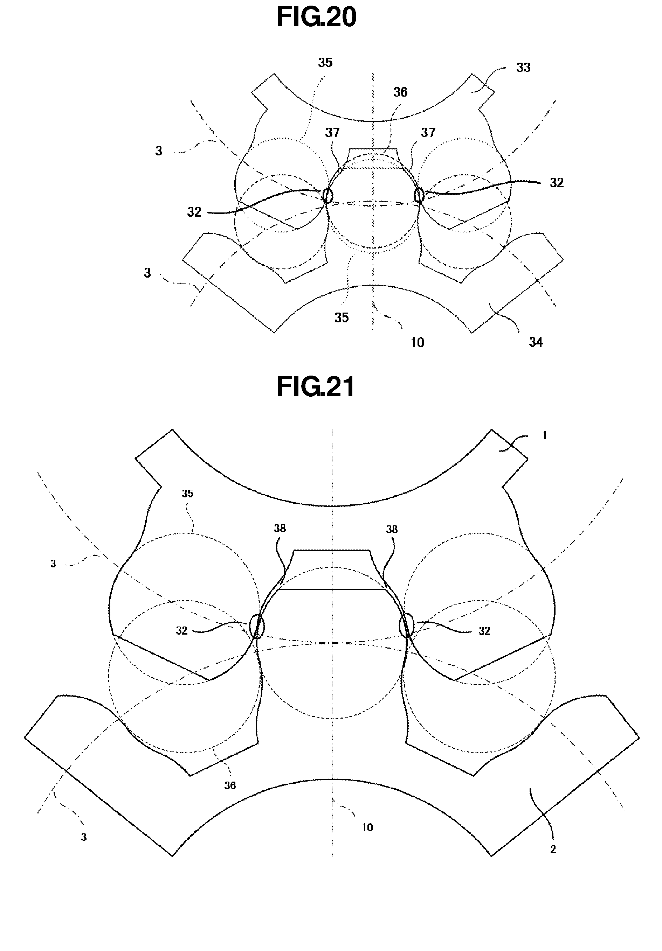

FIG. 20 is a schematic-diagram showing the gear-system with which the circle-tooth overlapped in the direction of the centerline.
FIG. 21 is a schematic-diagram showing the gear-system with which the deflection-amount of the circle-teeth was incorporated.

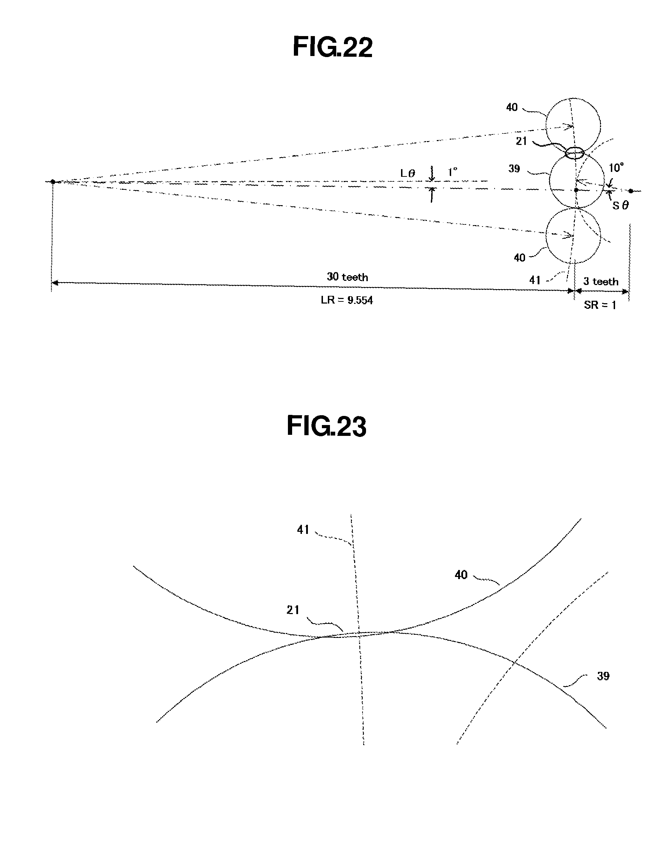

FIG. 22 is a schematic-diagram of mesh of the teeth formed standard circles of the tooth of 30 : 3.
FIG. 23 is an enlarged-view of the mesh-overlap-parts shown in Fig. 22.

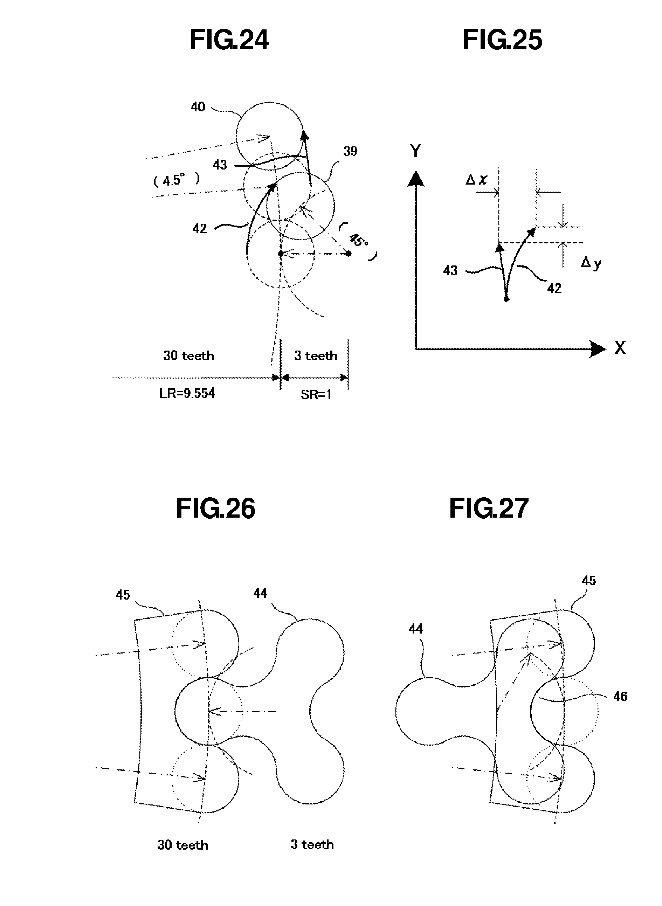

FIG. 24 is a schematic diagram of the trajectory of movement of teeth formed standard circles of the tooth of 30:3.
FIG. 25 is a graph of comparison of the movement-trajectory of the tooth top shown in Fig. 24.
FIG. 26 is a comparison-figure of the teeth-form of the tooth of 30 : 3.
FIG. 27 is a comparison-figure of the depth of the tooth-bottom of the tooth of 30 : 3.

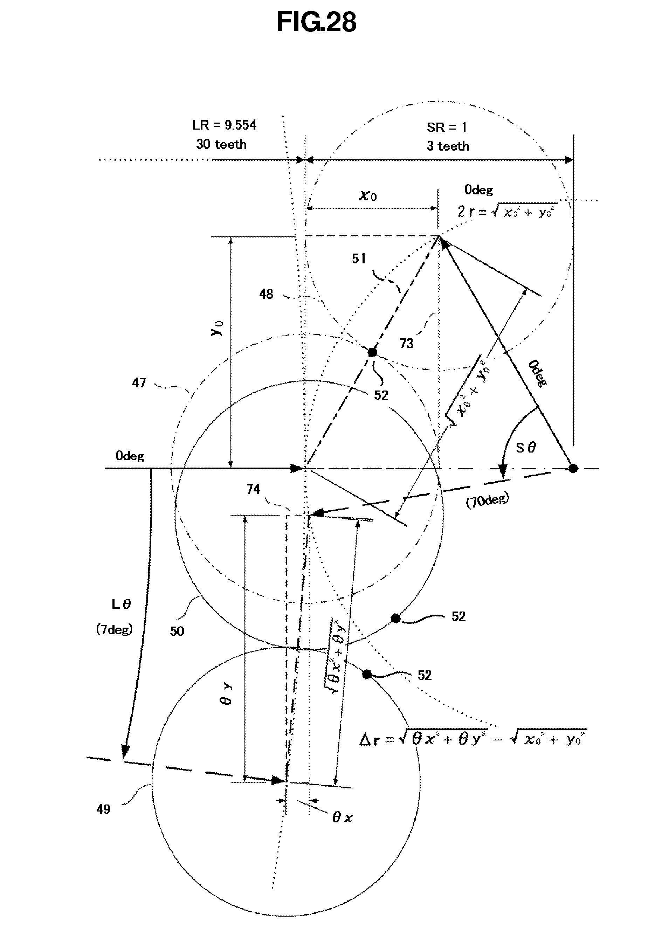

FIG. 28 is a graph of the teeth formed standard circles and the circle-tooth- centerline in mesh.

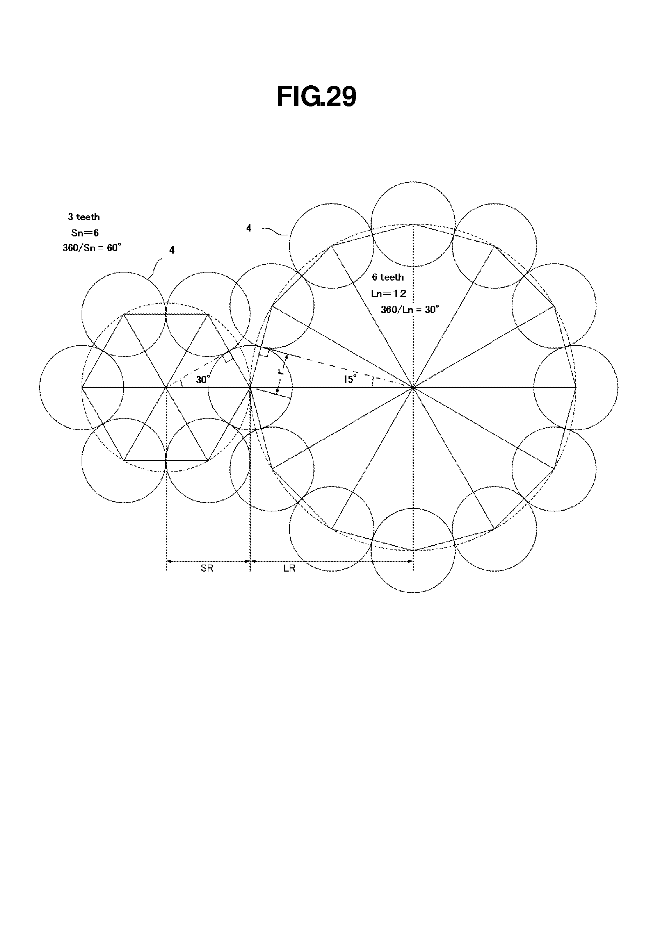

FIG. 29 is a general-drawing of the teeth formed standard circles which constitutes the gears.

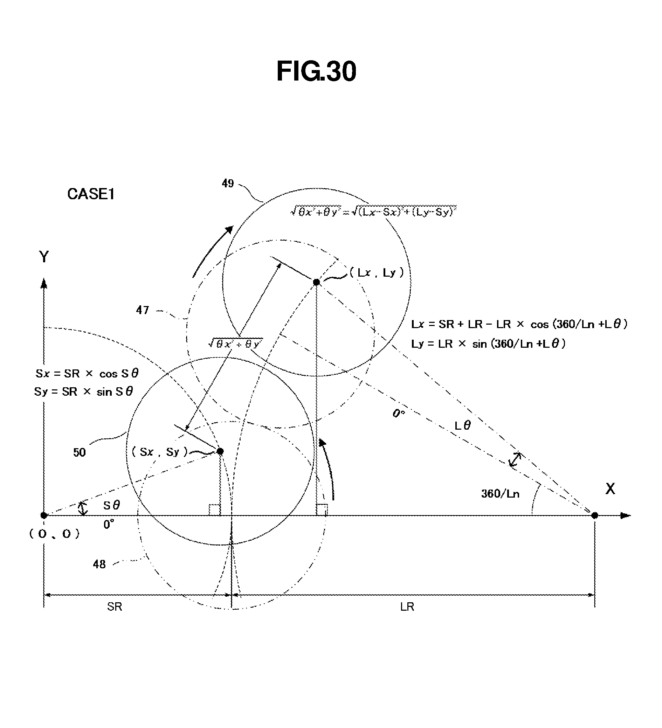

Fig. 30 shows the mesh pattern 1 (CASE1), this produces the calculation of the length of the circle-tooth-centerline.

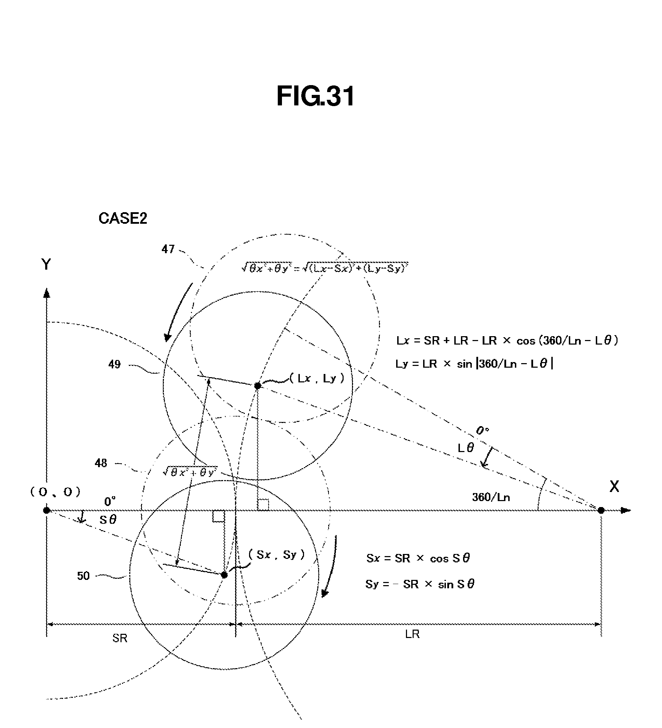

Fig. 31 shows the mesh pattern 2 (CASE2), this produces the calculation of the length of the circle-tooth-centerline.

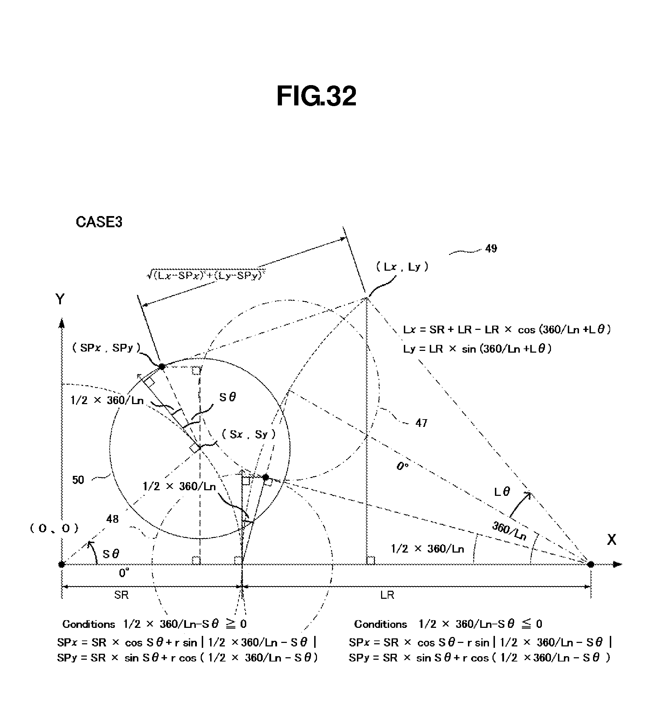

Fig. 32 shows the mesh pattern 3 (CASE3), this produces the calculation of the distance of the center of the mesh-reference-point and the teeth formed standard circles.

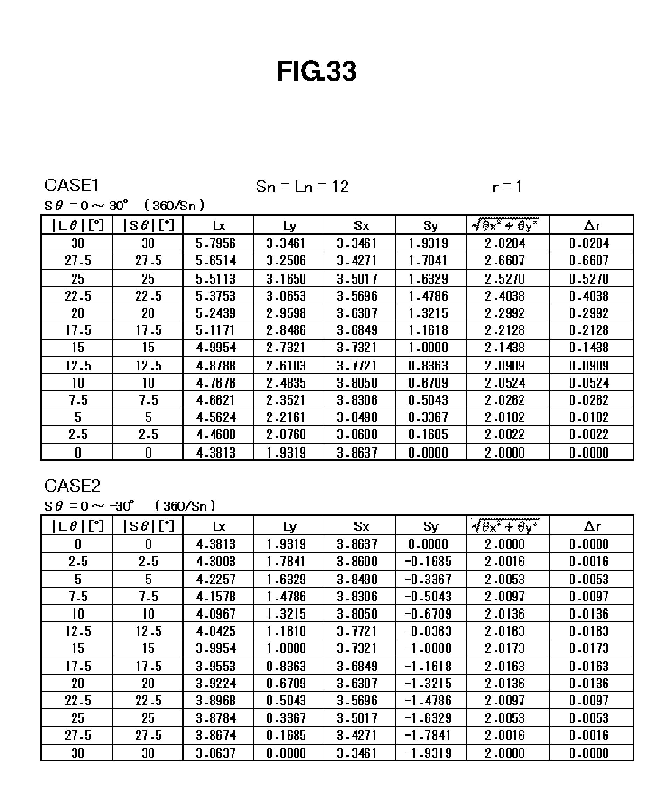

FIG. 33 is an operation-table of the change of the distance with the circle-tooth-centerlines in the mesh-pattern 1 and 2 of the tooth of 6:6.

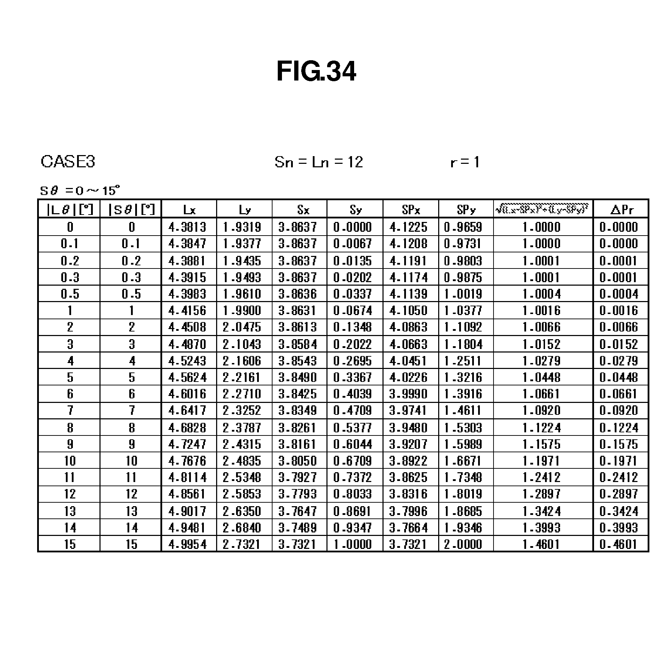

FIG. 34 is an operation-table of the change of the distance with the mesh-reference-point and the center of the teeth formed standard circles in the mesh pattern 3 of the tooth of 6:6.

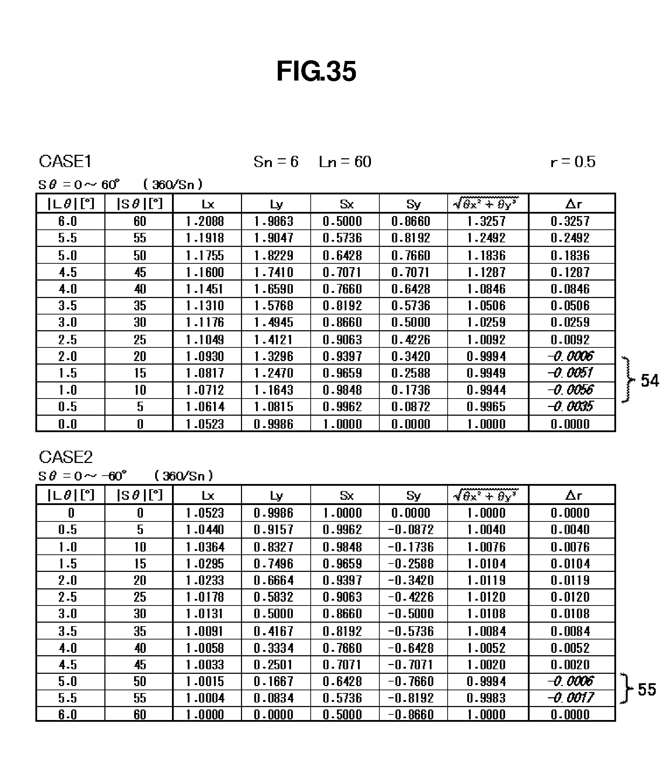

FIG. 35 is an operation table of the change of the distance with the circle-tooth-centerlines in the mesh pattern 1 and 2 of the tooth of 3:30.

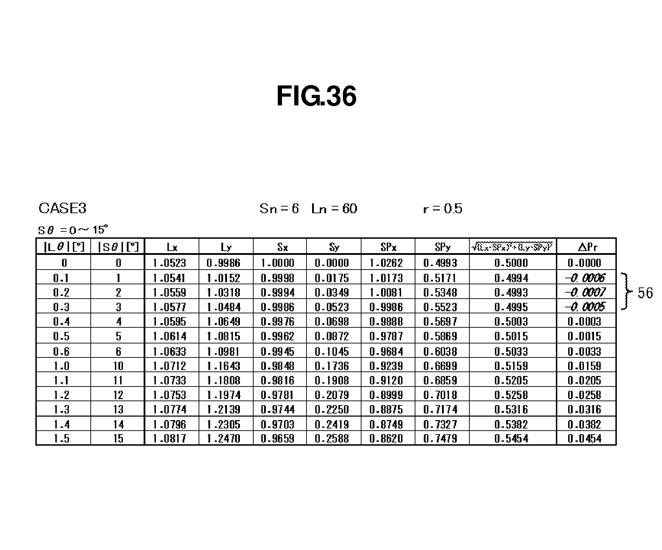

FIG. 36 is an operation table of the change of the distance with the mesh-reference-point and the center of the teeth formed standard circles in the mesh pattern 3 of the tooth of 3:30.

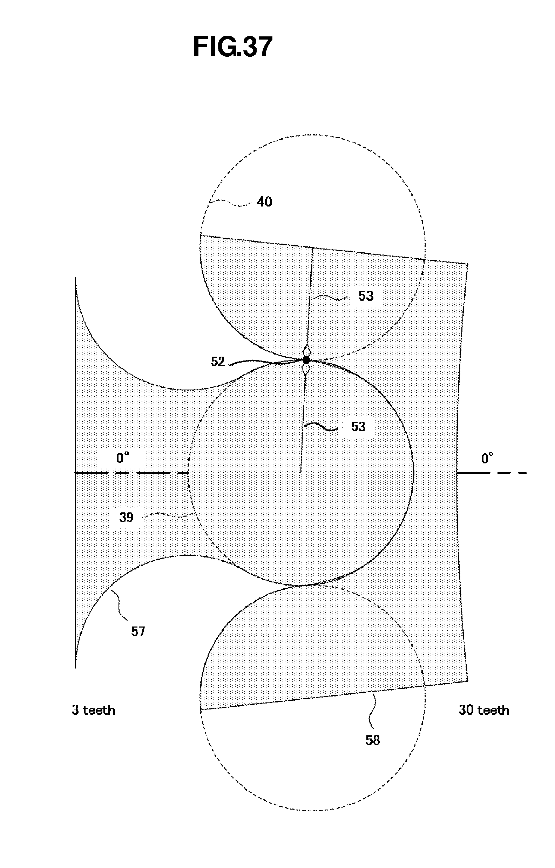

FIG. 37 is a schematic diagram of the mesh-phase 0° of 3:30 tooth in the shaping of the 4th requirement.

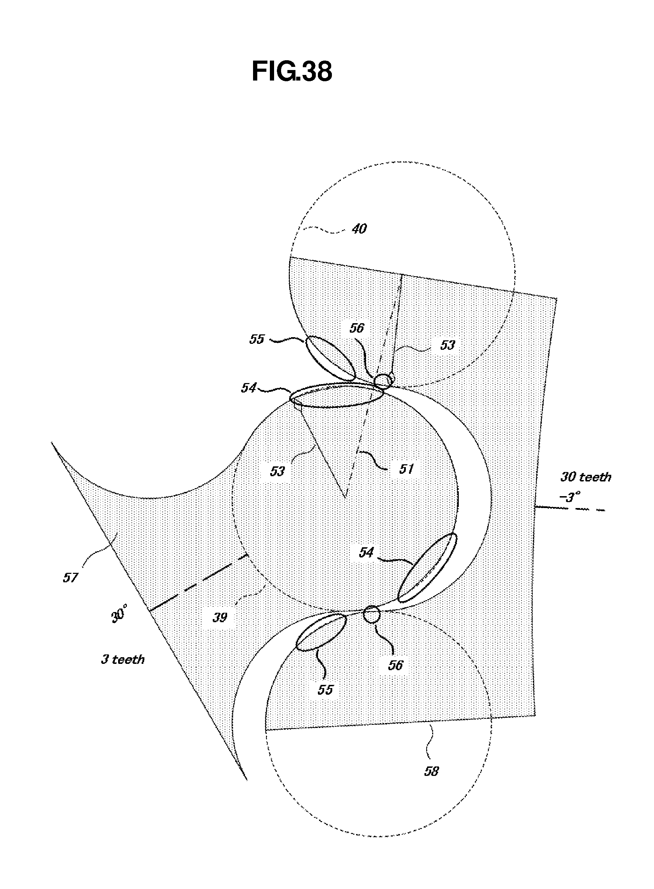

FIG. 38 is a schematic diagram of the mesh-phase 30° of 3:30 tooth in the shaping of the 4th requirement.

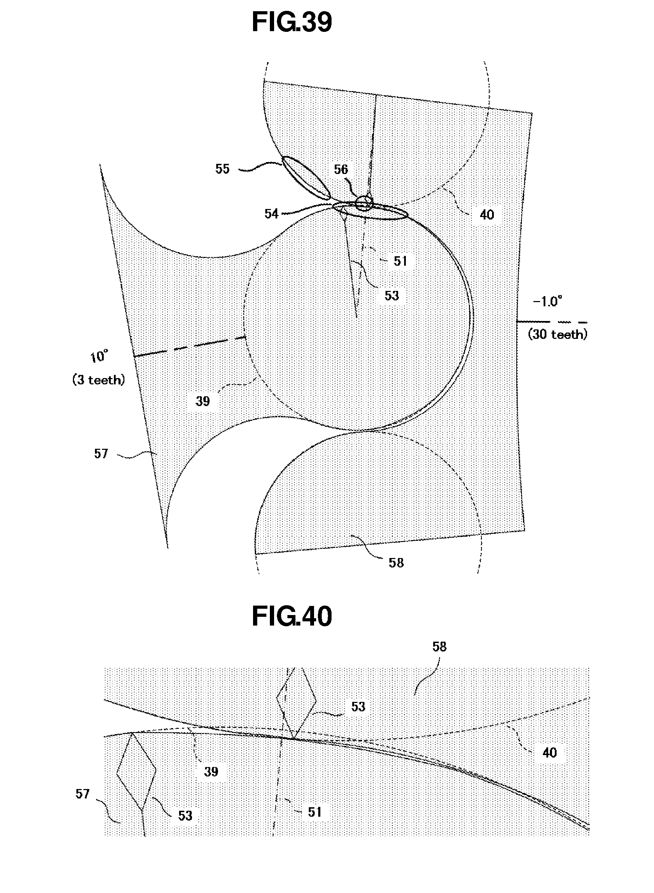

FIG. 39 is a schematic diagram of the mesh-phase 10° of 3:30 tooth in the shaping of the 4th requirement.
FIG. 40 is an enlarged-view of the contacting-face of the gear-system shown in fig. 39.

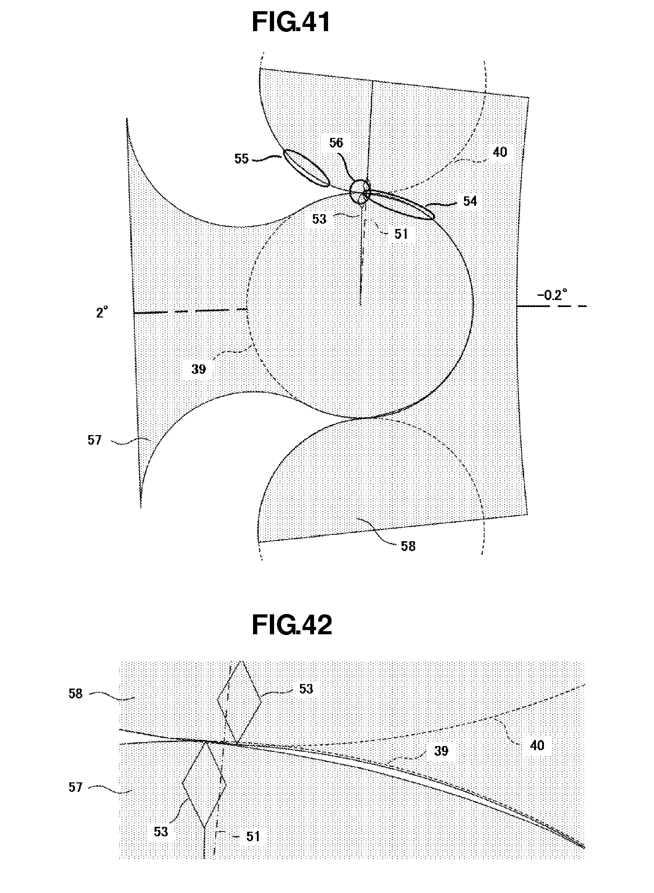

FIG. 41 is a schematic-diagram of the mesh-phase 2° of 3:30 tooth in the shaping of the 4th requirement.
FIG. 42 is an enlarged-view of the contacting-face of the gear-system shown in fig. 41.

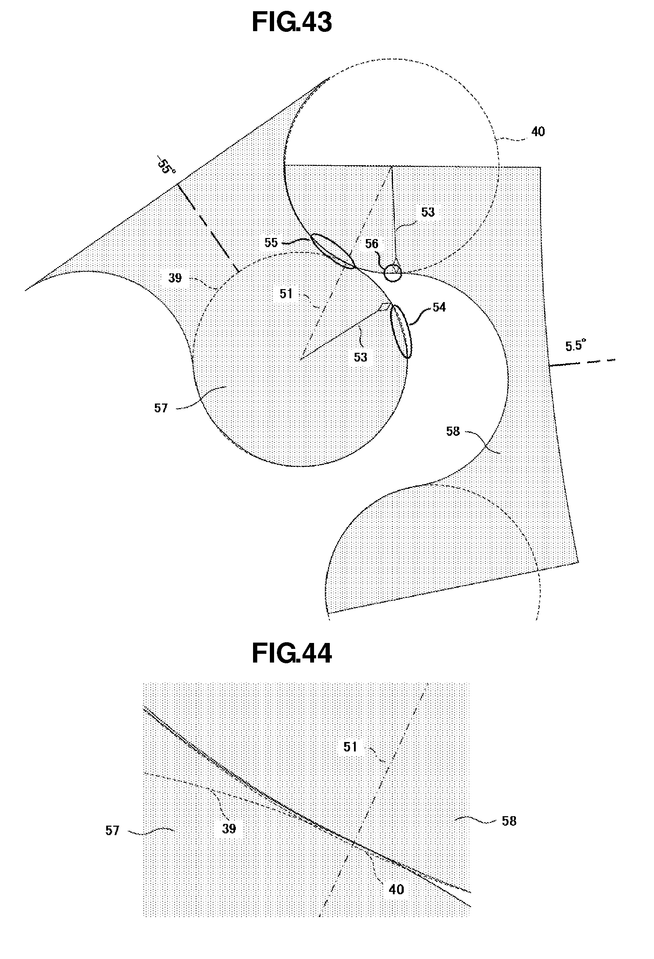

FIG. 43 is a schematic-diagram of the mesh-phase -55° of 3:30 tooth in the shaping of the 4th requirement.
FIG. 44 is an enlarged-view of the contacting-face of the gear-system shown in fig. 43.
The helical-gears-slice which the tolerance-margin was comprised [1], The helical-gears-slice of the circle-teeth [2], Gear-base-circle [3], teeth formed standard circle [4], Top land [5], Bottom land [6], Circle-tooth-gear [7], Circle-tooth-gear [8], Mesh-tangent-line (pitch point) [9], Centerline [10], The revolution-movement-trajectory of the teeth formed standard circle (Circle-tooth-gear 7) [11], The revolution-movement-trajectory of the teeth formed standard circle (Circle-tooth-gear 8) [12], The revolution-movement-position of the teeth formed standard circle (Circle-tooth-gear 7) [13], The revolution-movement-position of the teeth formed standard circle (Circle-tooth-gear 8) [14], The rotation-movement of the tooth-top of the teeth formed standard circle [15], The rotation-movement of the tooth-bottom of the teeth formed standard circle [16], The line from the center of a gear-base-circle [17], The rotation-movement of the teeth formed standard ellipse [18], The rotation-movement of the teeth formed standard ellipse [19], The position which is zero phase of the teeth formed standard (ellipse) [20], Mesh-overlap-parts [21], Conventional tooth-gear [22], Conventional tooth-gear [23], The waveform of the backlash angle of the direction of "+" of the circle-tooth [24], The waveform of the backlash angle of the direction of "-" of the circle-tooth [25], The waveform of the backlash angle of the direction of "+" of the conventional-tooth [26], The waveform of the backlash angle of the direction of "-" of the conventional-tooth [27], The helical-gear of the conventional-tooth [28], The helical-gear of the circle-tooth [29], The of the tooth top of the circle-tooth [30], The bottommost point of the circle-tooth [31], The contacting-face of tooth-flank of the angle near the centerline [32], The gear which cut the tooth-top and the tooth-bottom of the circle-teeth [33], The gear which cut the tooth-top and the tooth-bottom of the circle-teeth [34], The teeth formed standard circle of the gear 33 which cut the tooth top and bottom of the circle-tooth [35], The teeth formed standard circle of the gear 34 which cut the tooth top and bottom of the circle-tooth [36], The overlap part of the direction of the centerline [37], The clearance between the deflection-amount [38], The teeth formed standard circle of 3 teeth [39], The teeth formed standard circle of 30 teeth [40], The gear-base-circle of 30 teeth [41], The trajectory of movement of the tooth top of the teeth formed standard circle of 3 teeth [42], The trajectory of movement of the tooth top of the teeth formed standard circle of 30 teeth [43], Form of gear of three teeth [44], A part of form of gear of 30 teeth [45], Overlap of the form of the tooth-bottom of 3 teeth and 30 teeth [46], The teeth formed standard circle of the mesh peak of a large gear [47], The teeth formed standard circle of the mesh peak of a small gear [48], The teeth formed standard circle of the movement point of a large gear [49], The teeth formed standard circle of the movement point of small gear [50], The circle-tooth-centerline [51], The mesh-reference-point [52], The arrow head which shows mesh-reference-point [53], The mesh-overlap-parts of CASE1 of 3 : 30 teeth [54], The mesh-overlap-parts of CASE2 of 3 : 30 teeth [55], The mesh-overlap-parts of CASE3 of 3 : 30 teeth [56], The gear of 3 teeth with which shaping of requirements 4 was constructed [57], The gear of 30 teeth with which shaping of requirements 4 was constructed [58], Concave portion [61], Convex parts[62], Rotation axis 1 [71], Rotation axis 2 [72], The rectangle 1 which makes the center of the teeth formed standard circle of the mesh peak as a corner [73], The rectangle 2 which makes the center of the teeth formed standard circle of the rotation movement point as a corner [74], The radius of the gear-base-circle of a large gear [LR], The radius of the gear-base-circle of a small gear [SR], The rotation movement angle of a large gear (rotation angle from mesh-cycle-starting-point) [Lθ], The rotation movement angle of a small gear (rotation angle from mesh-cycle-starting-point) [Sθ], The amount of change of x axial direction [Δx], The amount of change of y axial direction [Δy], The radius of the teeth formed standard circle [r], The teeth formed standard circle number [n], The amount of overlap of the teeth formed standard circle [Δr], The amount of overlap of mesh-reference-point of one gear and the teeth formed standard circle of another gear [Δy], The centre-distance of x axial direction of the teeth formed standard circle which has meshed by the mesh peak [X0], The centre-distance of y axial direction of the teeth formed standard circle which has meshed by the mesh peak [Y0], The centre-distance of x axial direction of the teeth formed standard circle which has meshed at the rotation movement point [θx], The centre-distance of x axial direction of the teeth formed standard circle which has meshed at the rotation movement point [θy], The number of the teeth formed standard circle of a large gear [Ln], The number of the teeth formed standard circle of a small gear [Sn], The coordinates of the x-axis of the center of the teeth formed standard circle of the small gear of the rotation movement point [Sx], The coordinates of the y-axis of the center of the teeth formed standard circle of the small gear of the rotation movement point [Sy], The coordinates of the x-axis of the center of the teeth formed standard circle of the large gear of the rotation movement point [Lx], The coordinates of the y-axis of the center of the teeth formed standard circle of the large gear of the rotation movement point [Ly], The coordinates of the x-axis of mesh-reference-point of the small gear of the rotation movement point [SPx], The coordinates of the y-axis of mesh-reference-point of the small gear of the rotation movement point [SPy],

The definition of special wording is described below.

About the "mesh-cycle-starting-point". As for mesh of the gears, 'the uppermost of tooth top of one gear' and 'the bottommost point of tooth- bottom of another gear' overlap on the centerline to which the rotation axis of the gears was connected, let this condition be the starting point of the phase. And the range which will become in the same mesh condition is one Cycle.

About the "mesh peak". The peak of tooth-top and the bottommost-point of the tooth-bottom overlap with the aforesaid mesh-cycle-starting-point. And the uppermost and the bottommost-point overlap in a rotation of 1 / 2 Cycle from the mesh-cycle-starting-point, it is in the condition which the tooth-top and the tooth-bottom replaced. Namely this wording means these overlapping peaks.

About the "mesh-tangent-line". As for the helical gears, if it thinks that the rotation of gears is on xy axis, a pitch point exists in z axial direction in the state of a line. Namely this wording means this line.

About the "mesh-phase". It is stipulated that mesh-phase is 0° at the mesh-cycle-starting-point, and it is the angle which made the clockwise opposite the direction of "+".

About the "mesh-phase-breadth". The helical gear is formed which the slice-gears (spur-gears) are made to laminate at the direction of a rotation axis, and slice-gears are shifted little by little to the rotation direction, and the external-configuration is constituted smoothly. As for the mesh-tangent-line of the helical-gears, this shifted lamination means the breadth of the phase of mesh of the helical-gears, because the mesh from which the phase shifts exists continuously.

About "mesh-overlap-parts" and "slice-gear-overlap-regions". These are the collision-parts (overlapping-parts) by mesh of a correct-transmission-angle, the mesh before the design has the overlap-part and the overlap-regions, but it is lost because these overlap parts are cut, namely these gears have the ideal transmission faculty.

About the "deflection-amount". There are aged deterioration, and temperatures circumstances, and size-dispersion which happen by mass production. This wording means the amount of excision-shaping for the small effect part responding these distortions, and that small effect part is the extent that a performance can be guaranteed. The "tolerance-margin" means the estimate of the excision-shaping which takes the design-countermeasure on aforesaid size-dispersion and distortion matter, this becomes same amount mostly with the deflection-amount.

The "circle-tooth-centerline" is the line which connects the center of teeth formed standard circles of mesh gears, the length of the circle-tooth- centerline becomes the same as the diameter at the mesh peak. The "mesh- reference- point" is a contact point of the gears on the mesh-cycle-starting-point (It is the intersection point of the circle-tooth-centerline and teeth formed standard circles), and they are the positions on teeth. (It is the point which becomes a reference of shaping of a teeth form.)

The "marginal-gap" means the minimum gap for functioning as gears.

The "overlap-regions of the direction of a centerline" is a region deleted for shaping of the deflection-amount of the slice-gears, it overlaps the distance of the tolerance-margin in the direction of the centerline in the mesh peak, and what this means is the region where it overlapped for deleting.

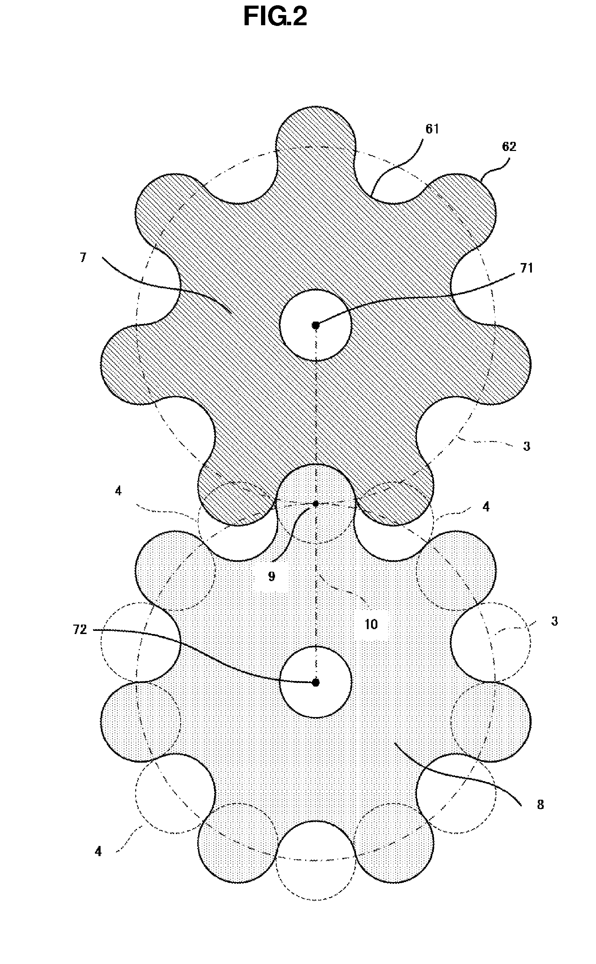

The gear-system of this implementation form is described with reference to drawings, using these wording definitions, up to the design form which considered the deflection-amount from that theoretical design form.
First, the theoretical design form which does not consider the deflection-amount below is described with reference to figs. 2 - 18.

As for this gear-system, Fig. 2 showing the gears 7 and 8 of the circle-teeth, the gear ratio is 1 : 1, they are the gears of the circle-teeth formed by the gears-base-circle 3 and teeth formed standard circles 4. The influence of the form of tooth is expressing this drawing with the gears of a small number of teeth which becomes large. (The meshing angle is large.) The center of teeth formed standard circles 4 are located on the circumference of the gears-base-circle 3, and teeth formed standard circles 4 are touched and located.
As for the gear-system shown in this figure 2, about the circumference parts of teeth formed standard circles 4, it is in mutual condition about that circumference-parts located in the inside-and-outside side-seen from the gears-base-circle 3, the teeth form is made along the direction of the circumference of the gears-base-circle 3, and it does not form the shape of the linear which was conspicuous in the perimeter part. As for a figure, the mesh-tangent-line 9 (pitch point) is located on the centerline 10 which connected the center of axis of gears 7 and 8.

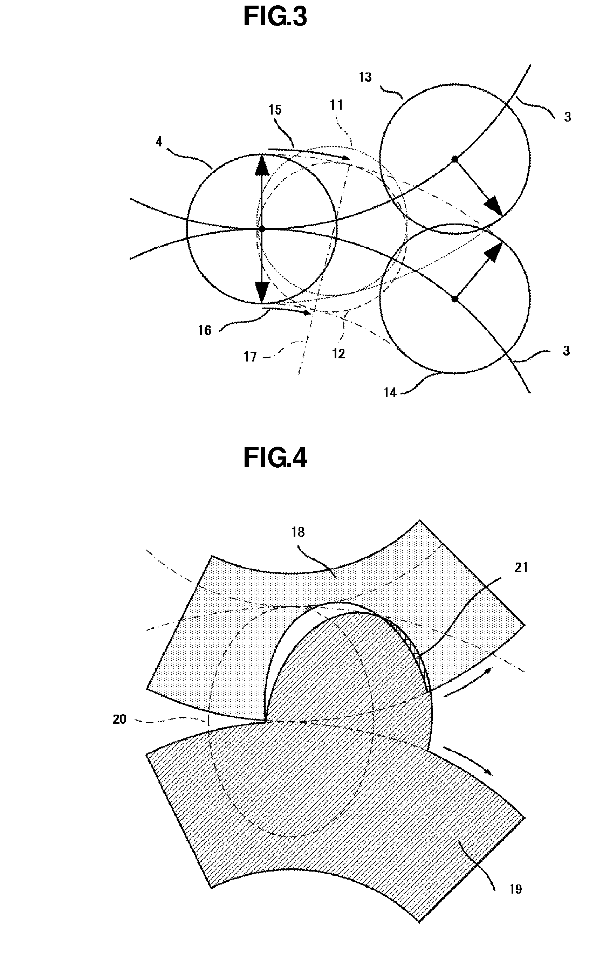

As for Fig. 3 and Fig. 4, teeth forms are contrasted with the circle (Fig. 3) and the ellipse (Fig. 4).
First, Fig. 3 is expressed by the teeth formed standard circle 4, as for it, the situation of mesh of the gears of the diameters of 1 : 1 of the circle-tooth of Fig. 2 is shown. As for the case of the rotation of the prescribed angle shown in the line 17 extended from the center of the gears-base-circle, the movement of the tooth in a gear 7 is shown by the revolution-movement-trajectory 11 of teeth formed standard circles, the movement of the tooth in the gear 8 is shown by the revolution-movement-trajectory 12 of teeth formed standard circles, it is the following in cases where it moreover shifts from this, the gear 7 shifts to the position of the revolution-movement-position 13 of teeth formed standard circles, the gear 8 shifts to the position of the revolution-movement-position 14 of teeth formed standard circles.

The difference of the velocity becomes explicit at the tooth top and the tooth-bottom with rotation of the gears, it compares the revolution-migration- length 15 of the tooth top of the teeth formed standard circle with the revolution- migration-length 16 of the tooth-bottom of the teeth formed standard circle. Mesh will not be affected if the teeth form is the circle, it is the same form even if the angle of the tooth top and the tooth-bottom of mutual gears is changed, because the tooth top and the bottommost-point exist on the circumference. Namely, if the form of teeth is the circle, teeth will not collide by a correct transmission angle, because the velocity of x axial direction of the center of the teeth formed standard circle is the same in a drawing. (Rightwards of the drawing)

Then Fig. 4 is a figure showing the situation of mesh of the revolution-movement-trajectory 18 and 19 of the gear of the ellipse teeth form of the diameters of 1:1.
In cases where the ellipse teeth-form gears rotates from the position of the ellipse 20 of teeth-form standard of the phase 0°, "the portion which the ellipse of the standard of the teeth form overlaps" 21 occurs, because there is the difference of the velocity in the tooth top and the tooth-bottom.
In Figure 3, if the configuration of the teeth is the circle, it does not occur, but it occurs if it is the ellipse. Even if it forms the teeth-form based on the ellipse, it becomes the cause of the transmission error for this phenomenon. Accordingly in figure 4, even if it makes it shaping based on the configuration of the teeth- form of the ellipse for the objective of the backlash-improvement, it is shown that it cannot make the Non-Transmission-Error and Non-Backlash Gears, even if it can approximate a only-backlash to zero, because the region 21 with which the ellipse of the standard of the teeth-form overlaps occurs.

First, the circle teeth-form is adopted not an ellipse, as for the gear ratio 1 : 1, the gears are considered in detail in form without the deflection-amount of the Non-Transmission-Error and Non-Backlash Gears.
Thus, the helical gear of the circle-tooth tries the proof of eliminating a transmission error and a backlash.

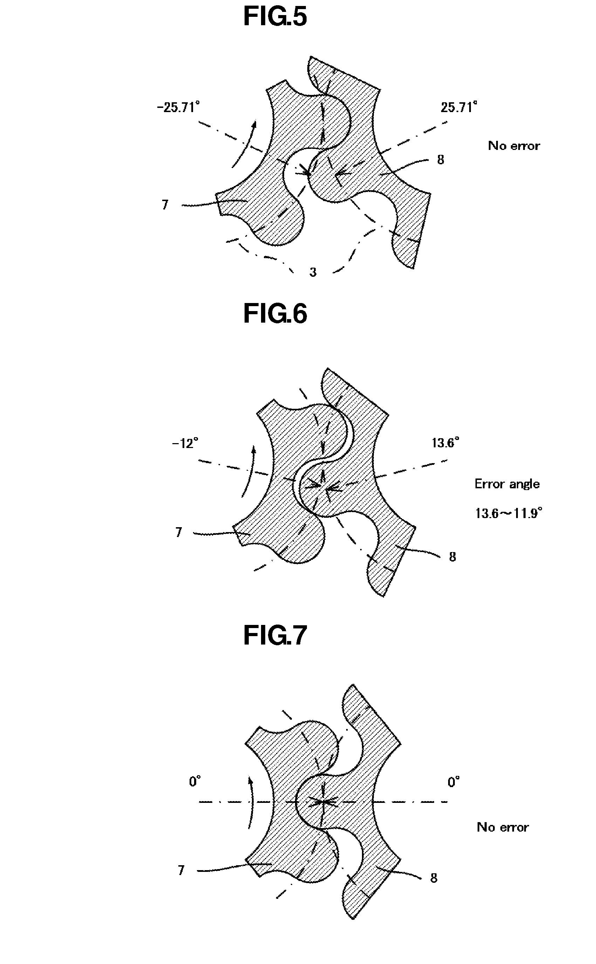

Figs. 5 - 10 illustrate each condition of the mesh about the spur-gear of seven teeth of the diameters of 1 : 1.
First, the mesh-cycle-starting-point is made into zero the mesh-phase, the clockwise reverse rotation is made into an angle of "+", and the direction of a clockwise rotation becomes an angle of "-", in Figs. 5 - 10, the mesh-phases are changed at -25.71°, -12°, 0°, 7°, 12°, and 25.71°.
It is shown by -25.71° (1/2 Cycle) of the mesh-phase of Fig. 5 that the backlash becomes zero. It is shown by -12° of the mesh-phase of Fig. 6 that the backlash will become 1.7°. It is shown by 0° of the mesh-phase of Fig. 7 that the backlash becomes zero. It is shown by 7° of the mesh-phase of Fig. 8 that the backlash will become 0.4°. It is shown by 12° of the mesh-phase of Fig. 9 that the backlash will become 1.7°. It is shown by 25.71° (1/2 Cycle) of the phase of Fig. 10 that the backlash becomes zero.
In each Figs. 5 - 13, the left gears is a prescribed angle and the right gears has approached the "+" side.

In contrast, Figs. 11-13 are illustrating each condition of mesh of the gears 22-23 of seven-teeth of the configuration of the conventional-teeth-form of diameters 1:1.
Fig. 11 shows the condition of mesh that the conventional-teeth-form-gears 22-23 is 0°. Fig. 12 shows the condition of mesh that the conventional-teeth- form-gears 22-23 is 7°. Fig. 13 shows the condition of mesh that the conventional-teeth-form-gears 22-23 is 13°.

Next, the backlash about these gears is analyzed with reference to Figs. 14 and 15. The waveform of Figs. 14 and 15 is expressing the angle of the backlash of the right gears in the arbitrary phases of the left gears. The waveform of Fig. 14 is the waveform of the backlash of the circle-tooth-gears of Fig. 5-10, the waveform of Fig. 15 is the waveform of the backlash of the conventional-teeth-form-gears of Fig. 11-13. The maximum angle of the backlash to the direction of "+" of the right-gear is graph-ized as the solid line, and the maximum angle of the backlash to the direction of "-" of the right-gear is graph-ized by the dotted line.
In addition, the rotations of the right-gears are free the angle between the waveforms of this solid line and this dotted line. The value of Figs. 14 and 15 measures the backlash of the gears of the circle-tooth of the 7-teeth-number by CAD (Computer illustrating), also case of the conventional-teeth-form is the same and the conventional-teeth-form of Figs. 11 - 13 is measured by CAD.
In the case of the conventional-teeth-form, the difference of the value of graph becomes large by the difference in teeth-form, it becomes the reference value which observes a waveform tendency.

As for the gears of the right and left on the drawing, ± is opposite value becomes a correct-transmission-angle, it is because the rotation-direction of the gears meshes conversely.
If mesh of Figs. 5-10 of the gears 7-8 of the circle-tooth is interpreted with the waveform of Fig. 14, it proves that a correct-transmission-angle exists within the limits of the backlash by all the phases.
In contrast to this, if mesh of Figs. 11-13 of the conventional-teeth-form-gears is interpreted with the waveform of Fig. 15, it shows the distribution of the backlash like a sine-wave overall, it has become clear that the range of the backlash has much phase in which the correct-transmission-angle does not exist.
Namely, according to the analysis of the data shown in these Figs. 14-15, if it compares with the gears of the conventional-form, it is proved that the circle-tooth 7-8 is predominance about the correct-transmission-angle.

To the next, as for technical consideration of the spur-gear of the circle-tooth so far, the slice-gears are shifted at the prescribed-angle, and it laminates repeatedly to the axial-direction, and the envelope-curve of the slice-gears-external-configuration formed around the outer circumference of the axis is made as the external-configuration, and this helical gear is considered.
Consequently, both the transmission-error and the backlash can be brought extremely close to zero.

Fig. 16 is a perspective diagram which made the gears of the conventional teeth and the circle-teeth as the helical gear, the helical gear 28 of the conventional teeth and the helical gear 29 of the circle-teeth are illustrated.
When the helical gear is seen from width, it comes to be shown in Fig. 18, it is formed so that 'the uppermost 30 of the tooth-top of the circle-tooth' and 'the bottommost-point 31 of the tooth-bottom of the circle-tooth' may be aslant located for a rotation axis.
About the helical-gear 29 of Fig. 17, slice-gears are shifted at a prescribed angle (For example, 5°), and it laminates repeatedly to an axial-direction, and the envelope-curve of the gears external-configuration formed in the circumference of an axis is made as an external-configuration.
It is shown in Fig. 18, mesh of the gears with which the phase-shifted- compounds and exists in the direction of the mesh-tangent-line 9.

It summarizes about the requirement for making the transmission-error and the backlash into zero, first, as for the slice-gears (spar-gear) of the circle-tooth of the diameters of 1 : 1, be shown in Fig. 14, a correct-transmission- angle is comprised in the range of the backlash, and as for the mesh, it is "the point which the mesh-phase is 0°" and "the point which shifted 1/2 Cycle" that the transmission-error and the backlash become zero.
Then, slice-gears are shifted at the prescribed angle (For example, 5°), and it laminates repeatedly to an axial direction, and the envelope-curve of the gears external-configuration formed in the circumference of an axis is made as an external-configuration, as for this helical gear, it will become the requisite to set mesh-phase-breadth more than 1/2 Cycle in the direction of a rotation axis.
If the mesh-phase-breadth more than 1/2 Cycle is set in the direction of a rotation axis, the transmission angle in the mesh peak of the slice-gear virtually laminated in the direction of a rotation axis is a correct-transmission-angle, collectively, the action of the helical-gear is restricted to the parts of the zero of the backlash, and if the aforesaid lamination is subdivided, it will become a correct-transmission-angle at all the mesh angles, and the backlash becomes the gear-system of zero.

As for the gear ratio 1 : 1, it is as follows if the requirements of materialization of the aforesaid Non-Transmission-Error and Non-Backlash Gear System are defined.
About the 1st requirement, [As for the slice-gear, it is the form in which a correct-transmission-angle is comprised in the range of backlash at all the mesh-phase.
It adds, for it becomes this requirement, teeth formed standard circles have the center on the circumference of the gears-base-circle, teeth formed standard circles need to be touched and placed.]
About the 2nd requirement, [The helical-gear is formed by "The slice-gears are shifted at the prescribed-angle, and it laminates repeatedly to the axial-direction, and the envelope-curve of the slice-gears-external-configuration formed around the outer circumference of the axis is made as the external-configuration." of the 1st requirement, all the mesh peak of this laminated slice-gear is a correct-transmission-angle, the backlash of mesh is zero in this mesh peak.]
About the 3rd requirement, [The mesh-phase-breadth of the helical-gear is more than 1/2 Cycle.]
As for the gear which satisfies these 1st -3rd requirements, Transmission Error And Backlash Are Zero Gear System can be materialized.

As for the case of a realistic gears, each gears is formed of the design value including some errors by the machining error, it becomes necessary shaping the setting of the deflection-amount for the Non-Transmission-Error and Non-Backlash Gears described previously.
Namely, the previous gear-system may be able to fancy it to the Non-Transmission-Error and Non-Backlash Gears of a perfect performance, but the dispersion in the product exists in mass production, furthermore, the error occurs in it by the temperature variation and aged deterioration, etc., because it is a perfect form, in the case of the distortion of the collision direction of the gears, it becomes the rotational obstruction or rotation stop.
Because, that gears does not become practical, if tolerance of the error on the manufacturing is not set up.

As for the slice-gear, i.e., the spur-gear, it is considered by the concept of the clearance between the meshing-gears by the teeth formed standard circles, if teeth-form-shaping which does not exceed the teeth formed standard circles is made, the correct-transmission-angle exists within the limits of the backlash, and the backlash will become large if that clearance is enlarged.
As to teeth-form-shaping of three requirements that aforesaid Transmission Error And Backlash Are Zero Gear System is materialized, if mesh of the zero- backlash is achieved at the mesh peak, the aforesaid 1st - 3rd requirements can be materialized.

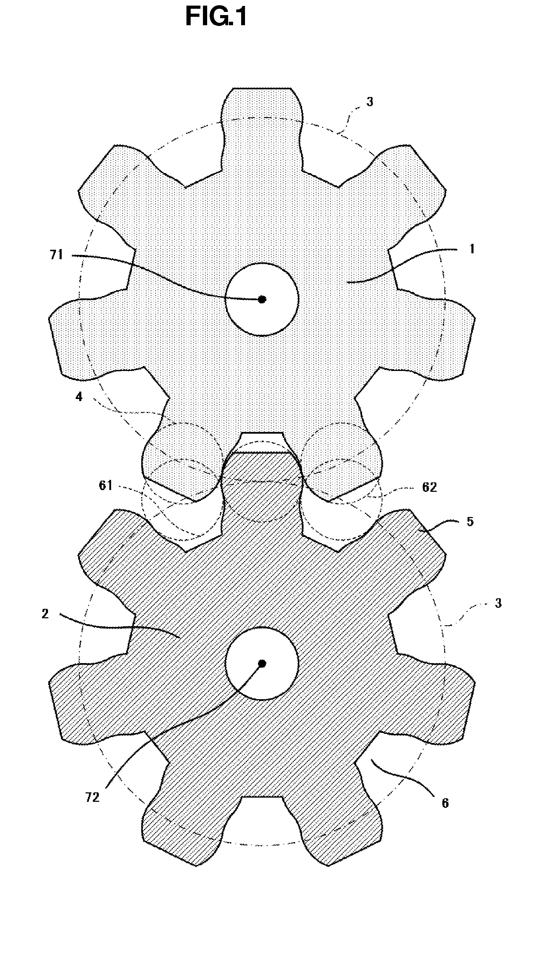

It is shown by Fig. 19, as for the mesh which is the zero-backlash at the mesh peak, it can cut the neighborhood of the teeth-top-and-bottom of the teeth-form which is the parts which does not have influence in mesh.
The aforesaid 1 st - 3rd requirements are satisfied at this shaping. This is described later on.
About the teeth-form of the gears shown in this figure 19, it is the same as that of Fig. 1. The center of the teeth formed standard circles 35, 36 is located on the circumference of gears-base-circle, moreover, plural teeth formed standard circles 35, 36 contact mutually and are placed, moreover, the teeth formed standard circles makes the parts of the teeth-form by turns along the direction of the circumference in contrast to the circumference-parts located in the inside-and-outside of the teeth formed standard circles, The teeth-top-side has the convex-parts along the outside of the teeth formed standard circles 35, 36, The tooth-bottom-side has the concave-portion along the inside of the teeth formed standard circles 35, 36, and it becomes gears form. It is formed by the convex-parts and the concave-portion, S character extended from the tooth top to the tooth-bottom is drawn, and it is formed continuously. The bottom-land 6 cut down to the center side of the axis is formed at the tooth-bottoms of each gear 33 and 34, The top-land 5 which cut off the uppermost-parts is formed at the tooth-tops of each gear 33 and 34, The face where these bottom-land 6 and top-lands 5 are parallel to the tangential-direction of the gear-axis-center-circle is constituted. As for the contacting-face 32 of the tooth-flank of the near-angle of the centerline, the backlash is formed by zero.

Fig. 20 is shown, These gears 33, 34 overlap in the direction of the centerline. It proves that the tooth-flank of the near-angle at the centerline hardly overlaps. The countermeasure against deflection-amount cuts the overlap- regions 37 of the direction of the centerline. As for this shaping, the contacting- face of the tooth-flank of the near-angle at the centerline is hardly cut, the 2nd requirement "the backlash of mesh is zero in this mesh peak" of mesh of the aforesaid zero-backlash is not perfect, but because it is almost zero, it can be deemed that it is materialized.

In addition, as for excision-shaping of the aforesaid overlap-regions 37, about the side which the tooth-top or the tooth-bottom cuts, if priority is given to mesh of the near-angle at the centerline of gears, the tooth-bottom side will be cut.

Shaping the gears shown in Fig. 1 and Fig. 21 according to the aforesaid content, it is a principal-part enlarged view of the gear-system of Fig. 1 and Fig. 21. If it is the aforesaid design method, even the quality of material with the large distortion of gears, gears with few transmission errors and few backlashes are realizable. if it is a quality of material with little dispersion and little distortion, it can form gears by the transmission error and near zero-backlash.

To the next, the gear-ratio other than 1 : 1 describes the Non-Transmission-Error and Non -Backlash Gears. If the gear-ratio of the gears of this invention is different, the mesh-overlap-parts occurs very slightly in assumption of the slice-gears.

As for the gear-ratio of 10 : 1 (30 teeth : 3 teeth) shown in Fig. 22 and Fig. 23, the mesh-phase Sθ = 10° is an angle to which the mesh-overlap-parts 21 becomes large. These mesh-overlap-parts do not occur with the gears of the same diameter, but the gears with a large difference of the gear-ratio enlarge it more. In Fig. 22 and Fig. 23, the teeth formed standard circles 39 of the gears of 3 teeth, and the teeth formed standard circles 40 of the gears of 30 teeth are shown the mesh-phase Sθ = 10°, it is shown on the 30 teeth of gears-base-circle 41 that the mesh-overlap-part 21 has occurred. In addition, Fig. 23 is a principal part enlarged view of the mesh-parts of the gears of Fig. 22.

It is consideration of the trajectory of the tooth top of the teeth formed standard circles shown in Fig. 24. Arrow heads show movement of the teeth formed standard circles 39 of the gears of 3 teeth, and the teeth formed standard circles 40 of the gears of 30 teeth. Fig. 25 shows, about the condition of the trajectory of the movement of the tooth top of the teeth formed standard circle of 3 teeth, and the trajectory of the movement of the tooth top of the teeth formed standard circle of 30 teeth. Furthermore, it is shown in Fig. 25 that the difference (Δy) occurs in the migration length of y axial direction of the tooth top of the teeth formed standard circles. Furthermore, it is shown in Fig. 26 and Fig. 27, As for the case where the gear 44 of 3 teeth and the gear 45 of 30 teeth are meshed, it is interpreted with the many-teeth-gears that the tooth-bottom becomes deep from the overlap position of the form of the tooth-bottom of 3 teeth and 30 teeth.

Moreover, as for the case which considered the mesh-overlap- parts of the gear-ratio of 10 : 1 (30 teeth : 3 teeth), Fig. 28 shows, the rectangle 73,74 of corners can show the mesh-condition of the gears of this invention with the coordinates of the center of the teeth formed standard circles. 'The teeth formed standard circle 47 of the mesh peak of the large gear (For example, 30 teeth)' and 'The teeth formed standard circle 48 of the mesh peak of the small gear (For example, 3 teeth)' are shown in Fig. 28, About that movement-point, the condition that the teeth formed standard circle 49 of the movement-point of the large gear and the teeth formed standard circle 50 of the movement-point of the small gear shift is drawn. The circle-tooth-centerline 51 becomes the same as the diameter of 'the teeth formed standard circle centering on the mesh-reference-point 52' at the mesh peak. 'The rectangle 74 which shows the mesh-condition of the movement-point' becomes a thin belt-like rectangle, it is a rectangle which is the long side θy and is the short side θx. Meanwhile, the rectangle 73 which shows the mesh-condition of the mesh peak has a region larger than the rectangle 74, it is a rectangle which is the long side y0 and is the short side x0.

This invention is shown in Fig. 29, the configuration of the teeth formed standard circles consists of right-angled-triangles.
The interact with between 'the radius "r" of the teeth formed standard circles 4', and the teeth formed standard circles-number "n" and 'the radius "R" of the gears-base-circle' becomes "r = Rxsin (360-/2n)". For the spatial-relationship of the teeth formed standard circles of this invention consists of right-angled- triangles, it can calculate each coordinates and distance with trigonometric- functions. In addition, as for Fig. 29, the gears-base-circle of a large gear is radius LR, the gears-base-circle of a small gear is radius SR.

Then, as for each mesh conditions of CASE1-CASE3, it is calculated whether the mesh-overlap-parts occurs.
First, in the case of mesh of Fig. 30 and Fig. 31 (CASE1, CASE2). As for calculating whether the mesh-overlap-parts occurs, if the length of the circle-tooth-centerline is shorter than the diameter of the teeth formed standard circle, the mesh-overlap-parts will have occurred. Let the center of a large gear (gears-base-circle) be a coordinates (Lx, Ly), let the center of a small gear (gears-base-circle) be a coordinates (Sx, Sy), the length of the circle-tooth- centerline is computed at each angle of mesh. About a figure, the movement point of the teeth formed standard circle 47 of the mesh peak of a large gear is the teeth formed standard circle 49, the movement point of the teeth formed standard circle 48 of the mesh peak of a small gear is the teeth formed standard circle 50. If the difference of the circle-tooth-centerline in this case and the diameter of the teeth formed standard circle is made to Δr, the occurrence requirements of an overlap-part are become to Δr < 0. (Δr = [Circle-Tooth-Centerline] - [Teeth Formed Standard Circle])

CASE3 which similarly is shown in Fig. 32, as for a correct transmission angle, the overlap part of 'the mesh-reference-point of a small gear' and 'the perimeter of the teeth formed standard circles of a large gear' is calculated at each angle.
About a figure, the movement point of the teeth formed standard circle 47 of the mesh peak of a large gear is the teeth formed standard circle 49, the movement point of the teeth formed standard circle 48 of the mesh peak of a small gear is the teeth formed standard circle 50. As for the distance of the coordinates (SPx, SPy) of the mesh-reference-point of a small gear, and the coordinates (Lx, Ly) of the center of the teeth formed standard circle 49 of a large gear, if it is smaller than the radius of the teeth formed standard circle, it will have occurrence of the mesh-overlap-parts. As for the mesh-reference-point of a small gear, and the teeth formed standard circle of a large gear, if the difference of the distance of centers and the radius of the teeth formed standard circle is made to "ΔPr", the requirements with occurrence of that overlap-part are become to "ΔPr<0". (ΔPr = [The distance of 'the Mesh-Reference-Point of one gear' and 'the centers of the Teeth Formed Standard Circle of another gear'] - [The radius of the Teeth Formed Standard Circle])

In the case of the gear-ratio 1 : 1 of the gears. (6 teeth : 6 teeth), the result of having calculated the condition of mesh of CASE1 of Fig. 30 and CASE2 of Fig. 31 is the tabulation of Fig. 33, the result of having calculated the condition of mesh of CASE3 of Fig. 32 is the tabulation of Fig. 34. It is the value of Δr and ΔPr which set the radius of the teeth formed standard circle as "1", "Sn" and "Ln" are "12", among 0° to 30°, an angle is shifted by a unit of 2.5°, and is calculated, in Fig. 33. As for the gears of the gear-ratio of 1 : 1 (6 teeth : 6 teeth), there is no occurrence of the mesh-overlap-parts by the calculation result. If the value of the minus appears in Δr and ΔPr of the calculation result, it will have occurrence of the mesh-overlap-parts.
About Fig. 14 and Fig. 15 which were described previously, the angle of the backlash was measured by illustrating of CAD, and it graph-izes. About the tabulation of Fig. 33 and Fig. 34, the overlap distance (gap) of the teeth formed standard circle is produced by calculation by the correct transmission angle.

Next, The tabulations of Fig. 35 and Fig. 36 are calculation tabulations of the gears of the gear-ratio of 1 : 10 (3 teeth : 30 teeth). As for Fig. 35, The angle θ is shifted by the unit of 5° by the minor-diameter side, Simultaneously, an angle is shifted by the unit of 0.5° by the major-diameter side, And the pattern of mesh of CASE1, CASE2, and CASE3 is calculated, respectively. It is the value of Δr and ΔPr which set the diameter of the teeth formed standard circle as "1". Although it is very few values according to the calculation result, Some of Δr and ΔPr are the values of a minus, (The referential marks 54, 55, and 56 show in the figure.) Hence, the mesh-overlap-parts has occurred.

It is based on such calculation, if Δr and ΔPr eliminate the mesh-overlap-parts which became a value of the minus, formation of the Non- Transmission-Error and Non-Backlash Gears is attained. If Δr and ΔPr define eliminating the mesh-overlap-parts which became the value of the minus, as the 4th requirement, in the case of the gear-ratio other than 1 : 1, as for all the phases of mesh of the correct-transmission-angle, the mesh-overlap-parts of the direction of a tooth top of the mesh-reference-point of the slice-gears are deleted, it becomes the requirements of shaping of this tooth-flank. As for each conditions of Figs. 30 - 32, at the mesh peak, it is mesh of the zero-backlash and non mesh-overlap-parts. If it is the mesh-overlap-parts which cut the tooth-top-side rather than the mesh-reference-point, it is shaping the teeth-form which does not have the collision at the correct-transmission-angle.

As for the gear-ratio other than 1 : 1,
Previous the 2nd requirement is described, [the helical-gear is formed by "The slice-gears are shifted at the prescribed-angle, and it laminates repeatedly to the axial-direction, and the envelope-curve of the slice-gears-external-configuration formed around the outer circumference of the axis is made as the external- configuration," of the 1st requirement, all the mesh peak of this laminated slice-gear is a correct-transmission-angle, the backlash of mesh is zero in this mesh peak]. For to satisfy this,
Next, about shaping of the 4th requirement, [As for all the phases of mesh of the slice-gears (spur-gear), the mesh-overlap-parts by the side of the tooth-top from the mesh-reference-point is deleted, and shaping that tooth flank.]
The above is so, thereby, the gear-system of this invention is constituted.

As for the content of this 4th requirement, Shaping the tooth flank and the tooth top, Mesh of that gears is shown by Figs. 37 - 44. About the dimension of the mesh-overlap-parts, even if it is the big gears of the difference of the gear-ratio, it becomes very few values, and if it is the gears of the big quality of material of the deflection-amount, it is the extent comprised in the range of the deflection-amount.

As for shaping of this teeth form, the 1st aforesaid requirement is described, [As for the slice-gear, it is the form in which a correct transmission angle is comprised in the range of backlash at all the mesh-phase.] this content is achieved.

Figs. 39 - 44. As for the slice-gears, shaping the face which touches by a correct-transmission-angle except the mesh peak,
[The slice-gears are shifted at the prescribed-angle, and it laminates repeatedly to the axial-direction, and the envelope-curve of the slice-gears-external- configuration formed around the outer circumference of the axis is made as the external-configuration],
If this is made into a helical gear, there is the shaping flank which touches by a correct-transmission-angle to the tooth-flank by the side of opposite of mesh,
For it constitutes the form which makes the zero-backlash from the correct-transmission-angle with except for the mesh peak of the slice-gears,
The 3rd previous requirement is described, [The mesh-phase-breadth of the helical gear is more than 1/2 Cycle.], this can lessen the mesh-phase-breadth of 1 / 2 Cycle.
As for this phase breadth made few, this changes by the difference in the gear-ratio of gears, and the difference in shaping of the tooth-flank.

About the gear-system of this invention, that design method is summarized and is described as follows.
First, As for the gear-system of the gear-ratio of 1 : 1, the teeth formed standard circles have a center on the circumference of the gears-base-circle, and the teeth formed standard circles are located by continuous contact, the tooth top is an inner circumference side slightly for the teeth formed standard circle at the marginal-gap-size, and the tooth-bottom is slightly formed in the outer- periphery-side, as for the mesh peak, the regions of overlap are shifted in the direction of the centerline of gears, in the margin distance of the tolerance presumed by the gears configuration, and those regions of overlap are deleted.
The slice-gears are shifted at the prescribed-angle, and it laminates repeatedly to the axial-direction, and the envelope-curve of the slice-gears-external- configuration formed around the outer circumference of the axis is made as the external-configuration, the helical-gear consists of this.
As for this slice-gears, the mesh peak is made into a correct-transmission-angle with all the slice-gears laminated, in addition, the mesh-phase-breadth is set on the mesh-tangent-line with more than 1 / 2 Cycle. This is made into the design method.

Moreover, as for the case where the gear-ratio is the gear-system other than 1 : 1, it is described as follows. The teeth formed standard circles have the center on the circumference of the gears-base-circle, and the teeth formed standard circles are located by continuous contact, The tooth top is an inner circumference side slightly for the teeth formed standard circle at the marginal- gap-size, and the tooth-bottom is slightly formed in the outer-periphery-side, As for the form of the slice-gears, the mesh-overlap-parts of all the phases is cut, which is the tooth-top-side from the mesh-reference-point. The tooth-form of the aforesaid shaping-parts is deleted in the distance of the marginal-gap in the meshing-parts, As for the mesh peak, the regions of overlap are shifted in the direction of the centerline of gears, in the margin distance of the tolerance presumed by the gears configuration, and those regions of overlap are deleted.
The slice-gears are shifted at the prescribed-angle, and it laminates repeatedly to the axial-direction, and the envelope-curve of the slice-gears-external- configuration formed around the outer circumference of the axis is made as the external-configuration, the helical-gear consists of this.
As for this slice-gears, the mesh peak is made into a correct-transmission-angle with all the slice-gears laminated, in addition, the mesh-phase-breadth is set on the mesh-tangent-line with more than 1 / 2 Cycle. This is made into the design method.

In addition, the slice-gears (spar-gear) which is thick in Fig. 17 is assumed, as for the gears which could shift at the fixed angle and was laminated by the axial direction, and it is the spar-gear which does not subdivide the phase.
This can form the gears with the transmission tolerance and near zero-backlash, because the phase with the near zero-backlash shown in Fig. 14 has breadth.

## Claims

1. The gears which is the Non-Transmission-Error and Non-Backlash Gears comprise;
first and second gears, the spur-gears are shifted at the prescribed-angle, and it laminates repeatedly to the axial-direction, and the envelope-curve of the spur-gears-external-configuration formed around the outer circumference of the axis is made as the external-configuration,
these are the helical-gears, besides it is the gear-system which meshes the helical-gear of the same-teeth-number mutually;
the center of the teeth formed standard circles is located on the circumference of gears-base-circle, moreover, plural teeth formed standard circles contact mutually and are placed, moreover, the teeth formed standard circles makes the parts of the teeth-form by turns along the direction of the circumference, in contrast to the circumference-parts located in the inside-and-outside of the teeth formed standard circles;
as for the mesh-position with which 'the peak of the tooth-top of one spur-gear' and 'the bottommost-point of the tooth-bottom of another spur-gear' overlap with 'the centerline to which each rotation-axis are connected', both slice-gears are overlapped in the direction of the centerline, furthermore, the slice-gear-overlap-regions is deleted, it is the gear-system which made the above as the teeth-form.

2. The Non-Transmission-Error and Non-Backlash Gears according to claim 1,
as for the slice-gears, the angle which becomes the same-mesh-condition at the minimum-angle is made into one Cycle,
as for the slice-gears of the axial-direction of the helical-gear, the angle laminated-and-rotated with the axis is the gear-system of the phase of 1/2 or more Cycle.

3. The Non-Transmission-Error and Non-Backlash Gears according to claim 1,
the spur-gears are shifted at the prescribed-angle, and it laminates repeatedly to the axial-direction, and the envelope-curve of the spur-gears-external-configuration formed around the outer circumference of the axis is made as the external-configuration,
these are helical-gears, moreover, it is the gear-system which meshes the helical-gears of the different-teeth-number mutually,
the center of the teeth formed standard circles is located on the circumference of gears-base-circle, moreover, plural teeth formed standard circles contact mutually and are placed, moreover, the teeth formed standard circles makes the parts of the teeth-form by turns along the direction of the circumference, in contrast to the circumference-parts located in the inside-and-outside of the teeth formed standard circles,
as for the mesh-position with which 'the peak of the tooth-top of one spur-gear' and 'the bottommost-point of the tooth-bottom of another spur-gear' overlap with 'the centerline to which each rotation-axis are connected', each slice-gears are rotated by a correct-transmission-angle,
this gear-system is the teeth-form which deleted the overlap-region of aforesaid the slice-gears.

4. The Non-Transmission-Error and Non-Backlash Gears according to claim 1,
as for mesh of a correct-transmission-angle of the teeth formed standard circles in the different-teeth-number, the calculation-value from 'the center of the teeth formed standard circle of one spur-gear' to 'the center of the teeth formed standard circle of another spur-gear' is obtained,
the value of the overlap-distance is obtained by the prescribed-calculation in comparison with the diameter of the gears-base-circles,
this is the gear-system which deletes those regions of overlap.

5. The Non-Transmission-Error and Non-Backlash Gears according to claim 4,
this case is mesh of a correct-transmission-angle with the gears of the different-teeth-number,
as for the distance of 'the mesh-reference-point of one gear' to 'the center of the teeth formed standard circles of another gear', it compares with the radius of the teeth formed standard circles, this distance smaller than the radius becomes the value of the overlap-region, this is the gear-system which deleted these regions of overlap.

6. The Non-Transmission-Error and Non-Backlash Gears according to claim 1,
as for the mesh peak, the distance of the tolerance-margin is shifted in the direction of the centerline, the gear-system which deleted those regions of overlap.

7. The Non-Transmission-Error and Non-Backlash Gears according to claim 4,
as for the slice-gears, the mesh-overlap-parts which overlap with the mesh-reference-point are deleted in all phases, the gear-system which makes this the external-configuration.
